# EUROPEAN PATENT APPLICATION

(11) **EP 4 749 322 A2**
(43) Date of publication of application: **27.05.2026**
(21) Application number: 25212260.1
(22) Date of filing: 30.10.2025
(51) Int. Cl.: G01S 7/40, G01S 13/931

(54) **RADAR CALIBRATION DEVICE FOR CALIBRATING RADAR SYSTEM AND OPERATION METHOD THEREFOR**

(30) Priority: 21.11.2024 TW 113144901
(71) Applicant: Arcadyan Technology Corporation, Hsinchu City 30071 (TW)
(72) Inventor: HSU, Chan-Wei, 505 Lukang Township, Changhua County (TW); SHIE, Jeng-Han, 423007 Taichung City (TW); PENG, Shih-Hsin, 300 Hsinchu City (TW); HSIAO, Hsuan-Yu, 302 Zhubei City, Hsinchu County (TW); HSIAO, Hung-Wen, 300 Hsinchu City (TW); KUO, Shin-Lung, 300 Hsinchu City (TW)
(74) Representative: Krauns, Christian

(57) **Abstract**

A radar calibration device for calibrating a radar system installed on a vehicle, is provided by the present disclosure. The radar system comprises a radar module and a radar control unit configured to receive a first signal output by the vehicle. The radar calibration device comprises a memory storing a configuration software. The radar calibration device also comprises a signal calibration unit providing information. The radar calibration device also comprises a processor coupled to the memory, the signal calibration unit and the radar control unit and configured to executing the configuration software. The processor calibrates the first signal to a second signal based on the information.

## Description

### BACKGROUND OF THE INVENTION

### Field of the Invention

The present disclosure is related to techniques of radar calibration device, and particularly, to operation method for radar calibration device.

### Description of the Related Art

Currently, intelligent safety systems in vehicles primarily cover all four sides of the vehicle, such as by 360 degrees, including forward collision avoidance, left and right blind spots, and rear detection. If these safety systems or radar systems are installed as aftermarket products, their installation accuracy and signal errors can vary depending on the vehicle type and installation positions, which may affect radar detection, and may cause inaccurate object detection, premature or late warnings, or no warnings at all. Therefore, there are needs for techniques of radar calibration which is capable to calibrate and set installed radar systems.

### SUMMARY OF THE INVENTION

The present disclosure is related to techniques of a radar calibration device, which can calibrate signals from a vehicle with an installed radar system, such as calibrating speed information, according to information provided by a signal calibration unit, and can also provide corresponding instructions according to operation signals of the vehicle. The aforementioned calibrated speed information can be used to accurately set detection areas of multiple radar modules of the radar system to accurately correspond to the warning area of each side or position of the vehicle.

According to a first aspect of the present disclosure, a radar calibration device for calibrating a radar system installed on a vehicle is provided. The radar system includes a radar module and a radar control unit configured to receive a first signal output by the vehicle. The radar calibration device includes a memory configured to store a configuration software. The radar calibration device also includes a signal calibration unit configured to provide information. The radar calibration device also includes a processor coupled to the memory, the signal calibration unit and the radar control unit and configured to execute the configuration software and receive the information, to calibrate the first signal to a second signal based on the information.

According to a second aspect of the present disclosure, an operation method for calibrating a radar system installed on a vehicle is provided. The operation method includes setting a radar control unit of the radar system, according to multiple positions at which multiple radar modules of the radar system are installed on the vehicle, to combine multiple warning areas within multiple detection areas of the multiple radar modules into a general warning area. The operation method also includes setting an indication unit of the radar system via a connection port of the vehicle according to multiple operation signals of the vehicle. The operation method also includes receiving, by the radar control unit, a calculated speed information of the vehicle through the connection port of the vehicle while the vehicle moving, and using a measured speed information provided by a speed measurement module to perform a speed compensation calibration on the calculated speed information received by the radar control unit according to the measured speed information to obtain a calibrated speed information.

The above and other aspects of the invention will become better understood with regard to the following detailed description of the preferred but non-limiting embodiment(s). The following description is made with reference to the accompanying drawings.

### BRIEF DESCRIPTION OF THE DRAWINGS

FIG. 1 is a function block diagram illustrating an example radar calibration device for calibrating a radar system installed on a vehicle, according to one or more embodiments of the present disclosure.
FIGs. 2A to 2E are diagrams illustrating configurations of detection ranges of radar modules according to installation positions of the vehicle, according to one or more embodiments of the present disclosure.
FIG. 3 is a flowchart illustrating an example operation procedure for calibrating a radar system installed on a vehicle, according to one or more embodiments of the present disclosure.

Like reference numbers and designations in the various drawings indicate like elements. It is also to be understood that the various exemplary implementations shown in the figures are merely illustrative representations and are not necessarily drawn to scale.

### DETAILED DESCRIPTION OF THE INVENTION

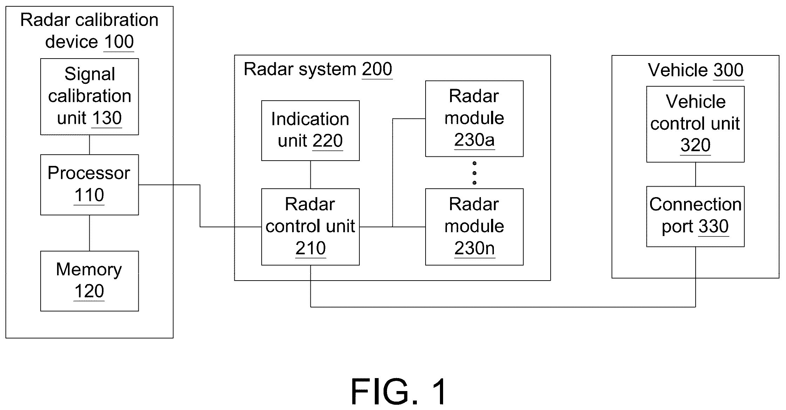

FIG. 1 is a function block diagram illustrating an example radar calibration device 100 for calibrating a radar system 200 installed on a vehicle 300, according to one or more embodiments of the present disclosure. The vehicle 300 may include a vehicle control unit 320 and a connection port 330. The vehicle control unit 320 may be configured to output or receive multiple signals to control vehicle 300. For example, vehicle control unit 320 may output calculated speed information (such as based on wheel diameter and rotational speed), or headlight signals, turn signal signals, or gear position signals for vehicle operation. Through the connection port 330, the vehicle control unit 320 may provide these signals to other devices installed on the vehicle, such as radar system 200, for operation in response to these signals.

The radar system 200 may include a radar control unit 210, an indication unit 220 and multiple radar modules, such as radar module 230a to radar module 230n. The radar control unit 210 may be an electronic control unit (ECU) coupled to the indication unit 220 and radar modules 230a to 230n. Radar modules 230a to 230n can respectively installed on different sides of the vehicle 300, such as front side, left side, right side and/or rear side. The radar modules installed on sides of the vehicle 300 may transmit multiple radar beams toward to different directions of the vehicle 300 via multiple transmit antennas (TXs), to form radar detection areas on each sided of the vehicle 300, such that, when objects present within the radar detection areas, detected radar signals can be transferred to the radar control unit 210, and the indication unit 220 can be used to provide indications to driver of the vehicle 300, such as through sound and/or light, to increase driving safety. In some implementations, the radar control unit 210 may receive signals provided by the vehicle control unit 320 by coupling to the vehicle control unit 320 of the vehicle 300, and set warning areas within radar detection areas based on these signals, such that, only when objects are detected within warning areas will the indicator unit 220 provide a warning or object-related information. In some implementations, the radar control unit 210 may categorize objects according to preset conditions when those objects are detected within warning areas, such as distinguish whether objects are vehicles, people or other objects by analyzing energy and position of reflected radar beams. It can be understood that, due to different speeds while the vehicle 300 moving, configurations of radar detection ranges or warning ranges of the radar modules need to be adjusted according to different speeds to meet actual usage needs. Similarly, when the vehicle 300 performs different operations, such as switching the headlights, turn signals, or gears, radar detection areas or warning areas of radar modules of the radar system 200 and the indication unit 220 can also be adjusted accordingly or provide relevant warning information. In order to enable the radar control unit 210 to operate radar modules according to signals provided by the vehicle control unit 320 more accurately, the techniques provided by the present disclosure further includes a radar calibration device 100.

The radar calibration device 100 is configured to calibrate the radar system 200 installed on the vehicle 300 and includes a signal calibration unit 130, a processor 110 and memory 120. The processor 110 coupled to the memory 120, the signal calibration unit 130 and the radar control unit 210 of the radar system 200. The memory 120 of the radar calibration device 100 may store a configuration software, and the processor 110 may execute the configuration software of the memory 120 to set up the radar control unit 210 of the radar system 200. The signal calibration unit 130 of the radar calibration device 100 is configured to provide information, such as information of actual measurement, and transmit the information to the processor 110. The processor 110 may calibrate other information detected by the radar system 200 or the vehicle 300 according to the information provided by the signal calibration unit 130.

In some implementations, the signal calibration unit 130 may include a speed measurement module, such as GPS module, to obtain a measured speed information actually measured by GPS module, and the measured speed information would be sent to the processor 110. In this case, the processor 110 may calibrate a calculated speed information calculated by the vehicle control unit 320 according to the measured speed information actually measured by the signal calibration unit 130, to obtain a calibrated speed information after the calibration. Wherein, the calibration method includes that the processor 110 calculates a speed deviation correction value and stores it in the radar control unit 210, and, after the radar control unit 210 obtaining the calculated speed information from the vehicle control unit 320, the speed deviation correction value is used to calculate a calibrated speed information. The calibrated speed information may provide to the radar control unit 210 of the radar system 200 for performing relevant configurations, such as accordingly adjusting detection area and warning area of each radar module. In some implementations of setting the calibrated speed information, when the vehicle 300 is moving at a speed exceeding 30 km/h, the measured speed information measured by the signal calibration unit 130 (or a speed measurement module, such as a GPS) is compared with the calculated speed information calculated by the vehicle control unit 320. The difference between the measured speed information and the calculated speed information is stored in the radar control unit 210. The radar control unit 210 then calculates the calibrated speed information based on the difference and the calculated speed information.

In some implementations, the radar control unit 210 can adjust radar detection areas or warning areas and/or related warning information of radar modules of the radar system 200 according to angular velocity information of the vehicle, wherein the angular velocity information of the vehicle includes steering angular velocity of the vehicle. In some implementations, the radar control unit 210 includes a heading detector, such as a gyroscope, to obtain a calculated angular velocity information of the vehicle. The signal calibration unit 130 includes an angle measurement module, such as a GPS, which measures a heading angle information, of the vehicle, obtained by the GPS and sends it to the processor 110. The processor 110 can convert the vehicle heading angle information actually measured by the signal calibration unit 130 into a vehicle angle change information, and calibrate a calculated angular rate information calculated by the radar control unit 210 to obtain calibrated angular rate information. The radar control unit 210 adjusts the radar detection areas or warning areas and/or related warning information of the radar modules of the radar system 200 according to the calibrated angular rate information.

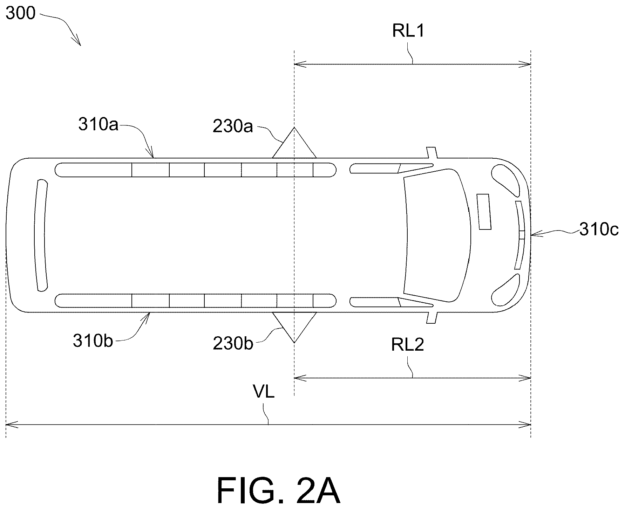

In some implementations, the signal calibration unit 130 may use vehicle operation signals from the vehicle control unit 320 received by the radar system 200 and configures the radar control unit 210 of the radar system 200 according to the vehicle operation signals, such that the radar control unit 210 may control the radar module and/or indication unit 220 in response to the vehicle operation signals, to adjust radar detection areas or warning areas and/or related warning information. Configurations of the radar system installed on the vehicle will be detailed described referring to FIGs. 2A to 2E as follows.

FIGs. 2A to 2E are diagrams illustrating configurations of detection ranges of radar modules according to installation positions of the vehicle 300, according to one or more embodiments of the present disclosure. As discussed above, since radar modules of the radar system 200 are installed at different positions (or different sides) of the vehicle 300, the detection areas of the radar beam will be affected. Therefore, after the radar modules of the radar system 200 are installed on the vehicle 300, the radar system 200 must be calibrated or configured by the radar calibration device 100. For example, the processor 110 of the radar calibration device 100 executes the configuration software in the memory 120 and calibrates and configures the radar modules and the indication unit 220 through the radar control unit 210 of the radar system 200 coupled to the radar calibration device 100.

Referring to FIG. 2A, radar modules 230a and 230b are respectively installed on the left side 310a and right side 310b of the vehicle 300. To calibrate the detection areas of radar modules 230a and 230b, the processor 110 of the radar calibration device 100 executes the configuration software. The vehicle length VL of the vehicle 300 and the distances RL1 and RL2 respectively between the center points of the radar module 230a installed on the left side 310a and the radar module 230b installed on the right side 310b, and the front side 310c of the vehicle 300 can be input through the configuration software, for calibrating and configuring detection ranges of the radar modules 230a and 230b.

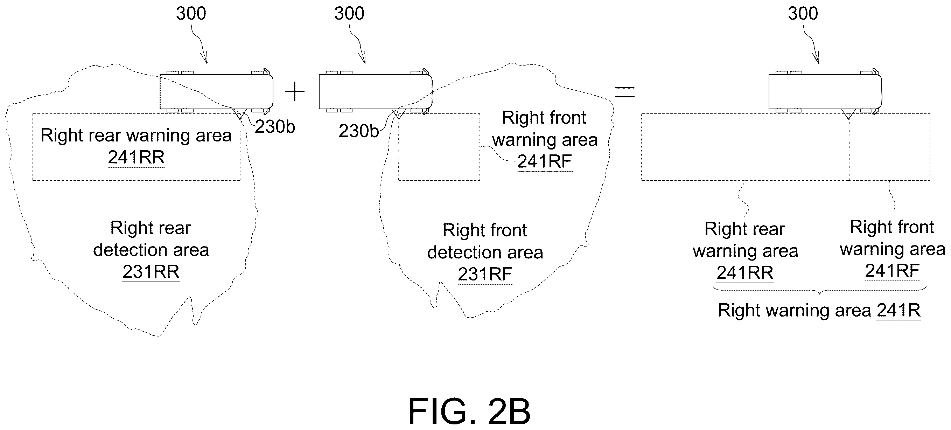

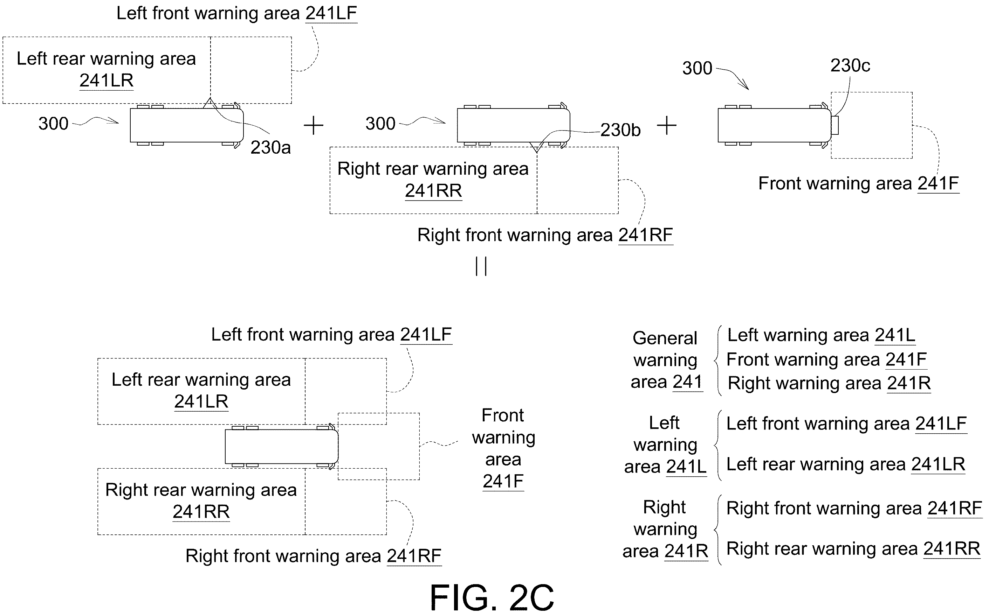

Referring to FIG. 2B and FIG. 2C, based on the aforementioned calibration and configuration, the radar module 230b installed on right side 310b of vehicle 300 can respectively form a right rear detection area 231 RR and a right front detection area 231 RF at the right rear and right front of vehicle 300. A right rear warning area 241 RR and a right front warning area 241RF can also be configured respectively within right rear detection area 231 RR and right front detection area 231 RF. The right rear warning area 241 RR and the right front warning area 241RF can be combined into right warning area 241R, as shown in FIG. 2B. As shown in FIG. 2C, similarly, the radar module 230a installed on left side 310a of vehicle 300 can also be calibrated and configured based on the aforementioned configuration to configure a left rear warning area 241LR and a left front warning area 241LF on left side 310a of vehicle 300, which are then combined into a left warning area 241L. Meanwhile, the radar module 230c installed on the front side 310c of vehicle 300 can set a forward warning area 241F. The left warning area 241L, the right warning area 241R, and the forward warning area 241F described above can be considered as a general warning area 241 of the radar system 200 installed on the vehicle 300. As discussed above, based on the configuration of the general warning area 241, only when an object is detected within the general warning area 2411, the indication unit 220 of the radar system 200 will provide a warning or object-related information.

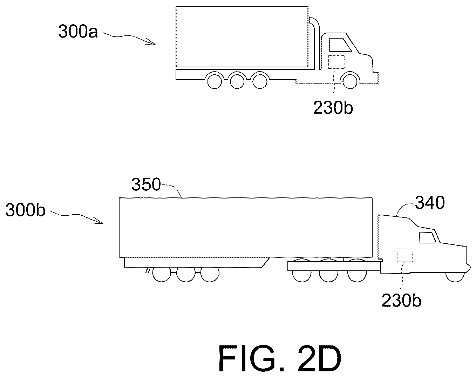

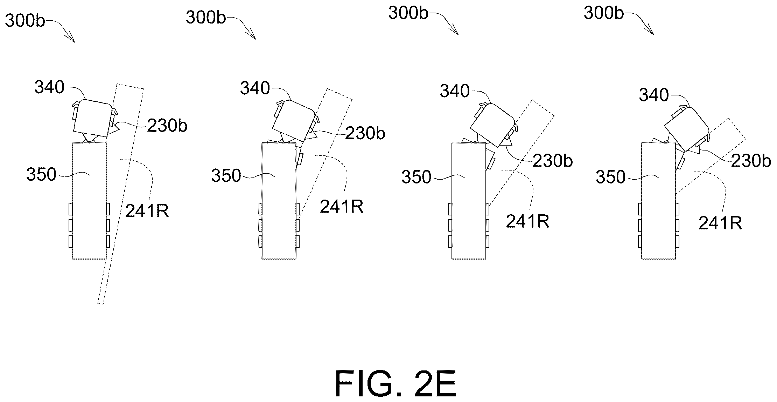

Referring to FIG. 2D and FIG. 2E, in some implementations, the vehicle type on which the radar system 200 is installed can be selected by the configuration software executed by the processor 110 of the radar calibration device 100, such as the vehicle 300a (straight vehicle or truck) or the vehicle 300b (tractor unit) in FIG. 2D. For example, in FIG. 2E, since vehicle 300b (tractor unit) has a tractor 340 and a semi-trailer 350, when vehicle 300b (tractor unit) turns right, the semi-trailer 350 will enter the right warning area 241R of the right radar module 230b installed on the tractor 340 to potentially trigger an inadvertent warning. Therefore, by configuring the vehicle model (or type), the detection distance and turn detection mode of each radar module of the radar system 200 can be adjusted, and the surrounding objects can be compared with the current position or speed of the vehicle to avoid the situation where the vehicle detects its own body (or semi-trailer) and issues a warning.

Due to different vehicle models (or types) or different vehicle operating signals, detection areas or indication units of the radar system 200 may have different configurations. Therefore, in some implementations, the configuration software executed by the processor 110 of the radar calibration device 100 can detect and learn gear signals and turn signals, for example, of the vehicle 300 via the connection port 330 coupled to the radar system 200 and the vehicle 300. The user can manipulate the corresponding signal to learn and set frequency and level of signals from the vehicle when signals are output at different high or low levels and corresponding frequencies. This allows radar detection areas or warning areas of radar modules of the radar system 200 and the indicator unit 220 to adjust or provide relevant warning information when the vehicle 300 performs different operations, such as switching the headlights, turn signals, or gear.

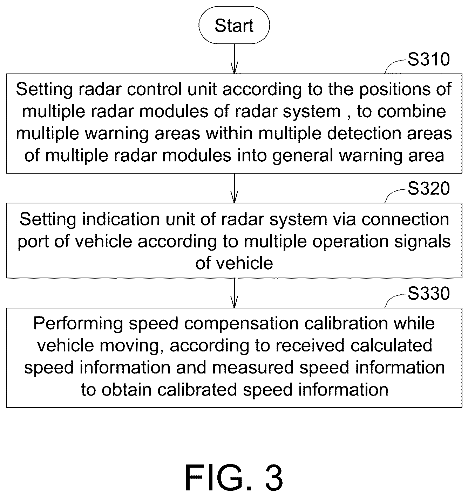

FIG. 3 is a flowchart illustrating an example operation procedure for calibrating a radar system installed on a vehicle, according to one or more embodiments of the present disclosure. For example, the radar system may include an indication unit, a radar control unit and multiple radar modules, and each radar module has a detection area and a warning area within the detection area. In step S310, sets the radar control unit according to multiple positions of the multiple radar modules being installed on the vehicle, to combine multiple warning areas into a general warning area. In step S320, sets the indication unit via a connection port of the vehicle according to multiple operation signals of the vehicle. In step S330, when the vehicle is moving, the radar control unit of the radar system performs speed compensation calibration according to received calculated speed information and measured speed information to obtain calibrated speed information.

In certain configurations, an installation position of each radar module of the radar system is determined by according to a length of the vehicle, a type of the vehicle and a distance between a center of each radar module and a front side of the vehicle.

In certain configurations, a left side warning area and a right side warning area of the multiple warning areas are set corresponding to the length of the vehicle, the type of the vehicle, a turning angle of the vehicle, the calibrated speed information of the vehicle, and a body position of the vehicle.

In certain configurations, the multiple operation signals of the vehicle include a headlight signal, a turn signal and a gear signal. The indication unit of the radar system is set to indicate according to at least one of the headlight signal, the turn signal or the gear signal.

In certain configurations, the radar control unit of the radar system performs the speed compensation calibration based on the measured speed information received by the speed measurement module when the calculated speed information of the vehicle is greater than 30 km/h to obtain the calibrated speed information.

According to the techniques provided by the present disclosure, warning areas can be combined by the position configuration of the radar, vehicle signals can be learned and configured from the vehicle operating signals, and speed delays and calculation errors within radar detection areas can be eliminated by compensating and calibrating the difference between actual measured speed information and calculated speed information. Accordingly, the techniques provided by the present disclosure can track detected objects by correctly configuring warning areas, analyze estimates of the speed and position, and trigger accurate indication to the driver when the object is within warning areas. Therefore, regardless of whether the vehicle (straight vehicle or truck, or tractor unit) on which the radar system is installed is moving straight, turning, or changing lanes, the calibration and configuration techniques provided by the present disclosure can effectively provide accurate signals (or indications) to prevent collision accidents.

While this document may describe many specifics, these should not be construed as limitations on the scope of an invention that is claimed or of what may be claimed, but rather as descriptions of features specific to particular embodiments. Certain features that are described in this document in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination in some cases can be excised from the combination, and the claimed combination may be directed to a sub-combination or a variation of a sub-combination. Similarly, while operations are depicted in the drawings in a particular order, this should not be understood as requiring that such operations be performed in the particular order shown or in sequential order, or that all illustrated operations be performed, to achieve desirable results.

Only a few examples and implementations are disclosed. Variations, modifications, and enhancements to the described examples and implementations and other implementations can be made based on what is disclosed.

## Claims

1. A radar calibration device (100), for calibrating a radar system (200) installed on a vehicle (300), wherein the radar system (200) comprises a radar module (230a-230n) and a radar control unit (210) configured to receive a first signal output by the vehicle (300), the radar calibration device (100) comprising:
a memory (120), configured to store a configuration software;
a signal calibration unit (130), configured to provide information; and
a processor (140), coupled to the memory (120), the signal calibration unit (130) and the radar control unit (210) and configured to execute the configuration software and receive the information, to calibrate the first signal to a second signal based on the information.

2. The radar calibration device (100) of claim 1, wherein the signal calibration unit (130) comprises a speed measurement module and an angle measurement module.

3. The radar calibration device (100) of claim 1 or 2, wherein the vehicle includes a vehicle control unit (320) configured to output the first signal.

4. The radar calibration device (100) of any one of claims 1 to 3, wherein the first signal includes a calculated speed information.

5. The radar calibration device (100) of any one of claims 1 to 4, wherein the information includes a measured speed information, and the second signal is a calibrated speed information.

6. The radar calibration device (100) of any one of claims 1 to 5, wherein the radar control unit (210) outputs a vehicle angular rate information.

7. The radar calibration device (100) of claim 6, wherein a vehicle heading angle information is obtained by calculating the information, and the vehicle angular rate information is calibrated according to the vehicle heading angle information.

8. An operation method for calibrating a radar system (200) installed on a vehicle (300), wherein the radar system (200) comprises an indication unit (220), a radar control unit (210) and a plurality of radar modules (230a-230n), and each of the plurality of radar modules (230a-230n) has a detection area (231RR, 231RF) and a warning area (241RR,241RF, 241LR, 241LF, 241F) within the detection area (231RR, 231RF), comprising:
setting the radar control unit (210), according to a plurality of positions of the plurality of radar modules (230a-230n) being installed on the vehicle (300), to combine the plurality of warning areas (241RR,241RF, 241LR, 241LF, 241F) into a general warning area (241);
setting the indication unit (220) via a connection port (330) of the vehicle (300) according to a plurality operation signals of the vehicle (300);
receiving a calculated speed information of the vehicle (300) through the connection port (300) of the vehicle (300) while the vehicle (300) moving and a measured speed information, provided by a speed measurement module, and
performing a speed compensation calibration on the calculated speed information with the measured speed information to obtain a calibrated speed information.

9. The operation method of claim 8, wherein an installation position of each of the plurality radar modules (230a-230n) of the radar system (200) is determined by according to a length (VL) of the vehicle (300), a type of the vehicle (300) and a distance (RL1, RL2) between a center of each of the plurality radar modules (230a-230n) and a front side of the vehicle (310C).

10. The operation method of claims 8 or 9, wherein a left side warning area (241L) and a right side warning area (241R) of the plurality of warning areas (241LR, 241LF, 241RR, 241RF) are set corresponding to the length (VL) of the vehicle, the type (300a, 300b) of the vehicle (300), a turning angle of the vehicle, the calibrated speed information of the vehicle, and a body position (350) of the vehicle.

11. The operation method of any one of claims 8 to 10, wherein the plurality of operation signals of the vehicle (300) comprise a headlight signal, a turn signal and a gear signal,
wherein the indication unit (220) of the radar system (200) is set to indicate according to at least one of the headlight signal, the turn signal or the gear signal.

12. The operation method of any one of claims 8 to 11, wherein, while performing the speed compensation calibration based on the measured speed information received by the speed measurement module, the calculated speed information of the vehicle is greater than 30 km/h to obtain the calibrated speed information.
